# EUROPEAN PATENT SPECIFICATION

(11) **EP 3 372 882 B1**
(45) Date of publication and mention of the grant of the patent: **07.07.2021**
(21) Application number: 18161008.0
(22) Date of filing: 09.03.2018
(51) Int. Cl.: F16K 37/00, G01D 5/14, G05B 1/00, G01D 5/245, H02P 6/16

(54) **CONTROL VALVE POSITIONING SYSTEM**
STEUERVENTILPOSITIONIERSYSTEM
SYSTÈME DE POSITIONNEMENT DE SOUPAPE DE COMMANDE

(30) Priority: 10.03.2017 US 201715455174
(43) Date of publication of application: 12.09.2018
(73) Proprietor: Hamilton Sundstrand Corporation, Charlotte, NC 28217 (US)
(72) Inventor: WICHOWSKI, Robert P., Westfield, MA Massachusetts 01085 (US); SEARS, Patrick J., South Hadley, MA Massachusetts 01075 (US); MUGURUSA, Diego S., North Haven, CT Connecticut 06473 (US); ROBERTS, Timothy A., Enfield, CT Connecticut 06082 (US)
(74) Representative: Dehns

(56) References cited:
- US-A1- 2005 152 489
- US-A1- 2007 194 259
- US-A1- 2016 054 351

## Description

### BACKGROUND OF THE INVENTION

This application relates to a system for identifying an actual position of a rotary device.

Modern systems include any number of components which are driven by rotary motors. Many of these systems require precise positioning.

Thus, it is known to develop position monitoring systems. As one example, in a brushless DC motor, it is known to provide sensors which sense rotation of the permanent magnets on a motor rotor. The motor rotor drives a shaft which, in turn, drives a component to a desired rotary position. In at least some systems, there is a gear speed change arrangement between a first shaft driven by the motor rotor and a second shaft which drives the component.

In practice, there is the potential for a difference between a sensed position, based upon the rotation of the motor rotor, and an actual position of the component. This can occur due to backlash within the gears due to torsional spring features. In addition, the shafts have a spring like response to the torque from the motor to the component.

There are also numerous other realities within an electromechanical system which can result in the sensed position being different from an actual position. All of these issues can result in the actual component position being different from a desired component position.

Of course, this could be undesirable. US 2005/152489 A1 describes a method of error-compensated counting of Hall states for position feedback. US 2007/194259 A1 describes a control system for a flow adjusting valve. US 2016/054351 A1 describes a method and apparatus for monitoring the speed and position of a rotating member.

### SUMMARY OF THE INVENTION

An electromechanical system is defined in claim 1 and has a component to be positioned, a rotary permanent magnet motor for positioning the component, and sensors for determining an apparent position of the component based upon rotation of the permanent magnets. A control counts movement of the permanent magnets that pass the sensors in a desired direction and also in an undesired direction. The control reaches an actual position of the component based upon both directions of rotation. The control also compares the actual position to an expected position of the component and identifies a need to calibrate should a difference between the actual and expected positions differ by more than a determined amount. The control senses the rotation of said permanent magnets past said sensors in an undesired direction when said motor is stopped.

A method is also disclosed and defined in claim 7.

These and other features may be best understood from the following drawings and specification.

### BRIEF DESCRIPTION OF THE DRAWINGS

Figure 1A schematically shows an electromechanical system.
Figure 1B shows an alternative system.
Figure 2 is a flowchart.
Figure 3 is a second flowchart.

### DETAILED DESCRIPTION

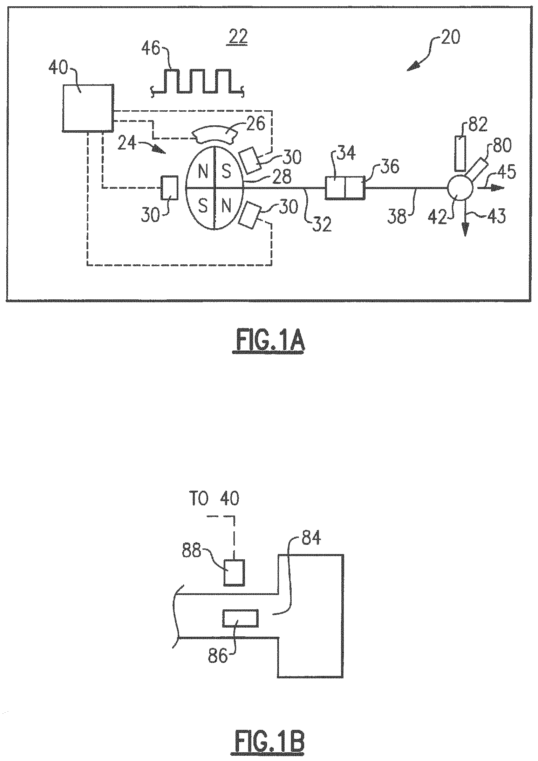

Figure 1A shows an electromechanical system 20, which may be utilized on a space craft 22. As can be appreciated, space craft 22 operates in an environment which may be exposed to unusually high amounts of radiation. This raises challenges with regard to control systems for utilization on the space ship 22.

System 20 includes a brushless DC motor 24 having a stator 26 and a rotor 28. As known, the rotor 28 includes a plurality of permanent magnets. Sensors, which may be Hall effect sensors 30 sense the passage of each of the magnets to calculate rotation of the rotor 28. Signal pulses 46 from sensors 30 are sent to a control 40, which calculates an apparent position of an output of the brushless DC motor 24.

The rotor 28 drives a first shaft 32, which in this embodiment, drives a gear 34. Gear 34 engages and drives a gear 36 to provide a speed change between the input shaft 32 and an output shaft 38. Output shaft 38 drives the rotational position of a component 42, which may be a valve.

In one embodiment, the valve controls supply of a coolant 43 to an outlet 45 for use of the coolant on a space craft 22.

The control 40 is driving the motor stator 26 to position the valve 42 at a desired position. While a valve 42 is disclosed, other components may come within the scope of this disclosure.

As can be appreciated, it may be desirable that the position of the valve 42 be known precisely to a control 40.

Thus, it is known to take feedback of the rotation and utilize that feedback to identify an apparent position of the component 42.

However, for the reasons set forth in the background of the invention, this feedback does not always provide an accurate indication of the actual position. As an example, when the motor 28 stops, the forces in the electromechanical system can result in undesired reverse rotation.

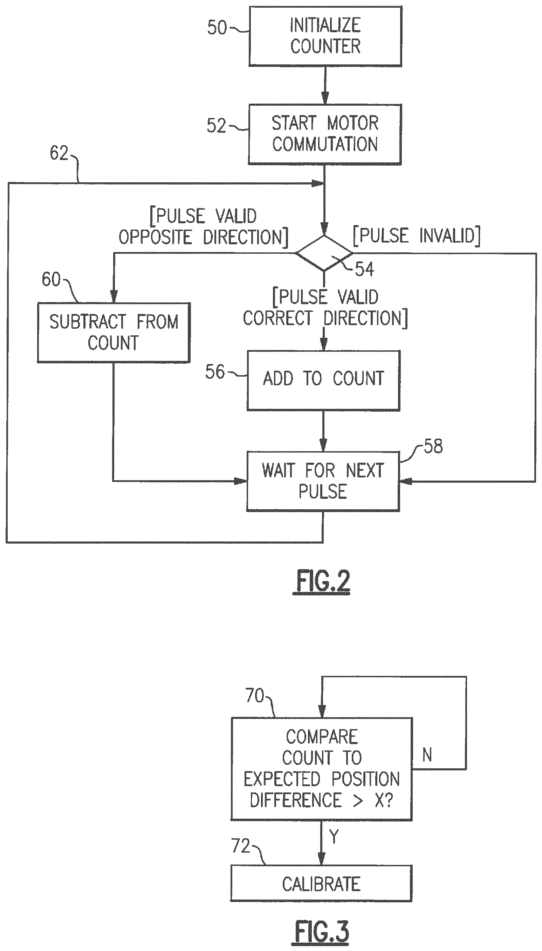

A flowchart shown in Figure 2 improves upon this control. At step 50, a counter is initialized, such as to zero. Then at step 52, motor commutation is done in which the rotation of the permanent magnets on the rotor 28 is sensed by the several sensors 30.

Sensors send pulses 46, as shown in Figure 1A. It is known to determine if a particular pulse is actually background noise or is an actual sensed pulse. As an example, this is disclosed in United States Reissue Patent 45,388. Moreover, this patent discloses the basic position sensing as described. This sensing is incorporated into this application by reference.

As shown in Figure 2, should a pulse be identified as background noise, it is deemed invalid and the method proceeds to wait for the next pulse at 58. However, should the pulse be deemed valid and in a correct or desired direction, then it is added to a count at step 56.

As mentioned above, there are a number of spring forces within the system 20 of Figure 1. When the motor 24 is stopped, it is possible for the system spring forces to result in rotation of the component 42 in an opposed direction from that desired. That is, the spring forces can relax and drive the component away from the desired positon. At step 60, should a pulse be sensed which is opposite to a desired direction, it is subtracted from the count.

Of course, the terms "add" and "subtract" would be dependent upon the desired direction. In some operations, rotation may be desired in say a counterclockwise direction such that the opposed movement would be clockwise. In other operations, it might be that the desired movement is clockwise, such that the "unwinding" would be counterclockwise. At any rate, the steps 56 and 60 result in an accurate understanding of what should be the actual position of the component 42 to a more accurate degree than has been the case in the past.

As shown in Figure 3 at step 70, the count is comparted to an expected position count. The question is asked is the difference between the actual count and the expected position count greater than a predetermined value X. If not, then no action is taken. On the other hand, should the difference exceed the predetermined value X, then a calibration step 72 is taken.

The value X may be selected to ensure there is not too much difference between actual and expected positions of the valve.

Figure 1A also shows one embodiment of a calibration step. An item 80 on the component 42 is driven back against the stop 82. This then provides a zero position for the component 80 and the system can then move to drive the component 42 back towards a desired position, which becomes the expected position.

It should be understood that the differences between the expected and actual position can build up over time and such a calibration step would remove that buildup, such that the actual position would become closer to the expected position.

Figure 1B shows another embodiment wherein a shaft 84, which may be either the shaft 32 or 38 from the Figure 1A system is provided with a permanent magnet 86. A sensor 88, which may be a Hall effect device, looks for the position of the magnet 86 and utilizes this position to again zero out or calibrate the location of the component 42 in the control 40. Then, the component 42 can be driven back toward a desired position.

Although an embodiment of this invention has been disclosed, a worker of ordinary skill in this art would recognize that certain modifications would come within the scope of this invention. For that reason, the following claims should be studied to determine the true scope and content of this invention.

## Claims

1. An electromechanical system (20) comprising:
a component (42) to be positioned;
a rotary permanent magnet motor (24) for positioning said component;
sensors (30) for determining an apparent position of said component (42) based upon rotation of said permanent magnets; and
a control (40) sensing movement of said permanent magnets past said sensors (30) in a desired direction, and also rotation of said permanent magnets past said sensors (30) in an undesired direction, and preparing a count of an actual position of said component (42) based upon both of said rotations, and wherein said control (40) senses said rotation of said permanent magnets past said sensors (30) in an undesired direction when said motor (24) stops, **characterized by** said control (40) also comparing said actual position to an expected position for said component (42) and identifying a need to calibrate should a difference between said actual and expected positions differ by more than a determined amount, wherein said permanent magnet motor (24) is configured to drive a first shaft (32) having a first gear (34), said first gear (34) driving at least a second gear (36) to, in turn, drive a second shaft (38) which moves said component (42) in a rotary direction, with said first and second gears (34, 36) changing a speed between said first and second shafts (32, 38) and
wherein each of said first and second shafts (32, 38) and gear teeth between said first (34) and second (36) gears having a spring force which may result in rotation in said undesired direction when said motor (24) stops;
wherein if said calibration is deemed needed, a surface on said component (42) is driven against a stop (82) to provide a new expected position in said control for said component (42).

2. The electromechanical system (20) as set forth in claim 1, wherein said component (42) is a valve.

3. The electromechanical system (20) as set forth in claim 1 or 2, wherein said sensors (30) are Hall effect sensors.

4. The electromechanical system (20) as set forth in any preceding claim, wherein said component (42) is mounted on a space vehicle.

5. The electromechanical system (20) as set forth in any preceding claim, wherein said control (40) is programmed to determine whether a pulse from each of said sensors (30) is either an invalid pulse, an actual pulse in said desired direction, or an actual pulse in said undesired direction.

6. The electromechanical system as set forth in any preceding claim, wherein if said calibration is deemed needed, a sensor (30) senses a location of a feature, and the location of said feature being utilized to provide a new expected position in said control for said component (42), and
wherein said feature is a permanent magnet.

7. A method comprising the steps of:
driving a rotary permanent magnet motor (24) for positioning a component;
sensors (30) determining an apparent position of said component based upon rotation of said permanent magnets past said sensor (30); and
sensing movement of said permanent magnets past said sensors (30) in a desired direction, and also rotation of said permanent magnets past said sensors in an undesired direction, and preparing a count of an actual position of said component (42) based upon both of said rotation directions, and comparing said actual position to an expected position of said component (42) and identifying a need to calibrate should a difference between said calculated and expected positions differ by more than a determined amount, and wherein said step of sensing said rotation of said permanent magnets past said sensors in said undesired direction occurs when said motor (24) stops; wherein said permanent magnet motor (24) drives a first shaft (32) having a first gear (34), said first gear (34) driving at least a second gear (36) to, in turn, drive a second shaft (38) which moves said component (42) in a rotary direction, with said first and second gears (34, 36) changing a speed between said first and second shafts (32, 38) and
wherein each of said first and second shafts (32, 38) and gear teeth between said first (34) and second (36) gears having a spring force which may result in rotation in said undesired direction when said motor (24) stops;
wherein if said calibration is deemed needed, a surface on said component (42) is driven against a stop (82) to provide a new expected position in said control for said component (42).

8. The method as set forth in claim 7, wherein said component (42) is a valve.

9. The method as set forth in claim 7 or 8, wherein said sensors (30) are Hall effect sensors, and/or wherein said component (42) is mounted on a space vehicle.

10. The method as set forth in any of claims 7 to 9, wherein a control (40) determining if a pulse from each of said sensors (30) is either an invalid pulse, an actual pulse in said desired direction, or an actual pulse in said undesired direction.

## Patentansprüche

1. Elektromechanisches System (20), umfassend:
eine Komponente (42), die positioniert werden soll;
einen Drehpermanentmagnetmotor (24) zum Positionieren der Komponente;
Sensoren (30) zum Bestimmen einer scheinbaren Position der Komponente (42) auf Grundlage einer Drehung der Permanentmagneten; und
ein Steuerelement (40), das eine Bewegung der Permanentmagneten an den Sensoren (30) vorbei in einer erwünschten Richtung und auch eine Bewegung der Permanentmagneten an den Sensoren (30) vorbei in einer unerwünschten Richtung erfasst und einen Zählimpuls einer tatsächlichen Position der Komponente (42) auf Grundlage der beiden Drehungen vorbereitet, und wobei das Steuerelement (40) die Drehung der Permanentmagneten an den Sensoren (30) vorbei in einer unerwünschten Richtung erfasst, wenn der Motor (24) anhält, **dadurch gekennzeichnet, dass** das Steuerelement (40) zudem die tatsächliche Position mit einer erwarteten Position für die Komponente (42) vergleicht und eine Notwendigkeit zum Kalibrieren identifiziert, sollte sich ein Unterschied zwischen der tatsächlichen und der erwarteten Position um mehr als ein vorbestimmtes Ausmaß unterscheiden,
wobei der Permanentmagnetmotor (24) dazu konfiguriert ist, eine erste Welle (32) anzutreiben, die ein erstes Zahnrad (34) aufweist, wobei das erste Zahnrad (34) mindestens ein zweites Zahnrad (36) antreibt, um wiederum eine zweite Welle (38) anzutreiben, die die Komponente (42) in einer Drehrichtung bewegt, wobei das erste und das zweite Zahnrad (34, 36) eine Drehzahl zwischen der ersten und der zweiten Welle (32, 38) ändern, und
wobei jedes von der ersten und der zweiten Welle (32, 38) und Verzahnung zwischen dem ersten (34) und dem zweiten (36) Zahnrad eine Federkraft aufweist, die zu einer Drehung in der unerwünschten Richtung führen kann, wenn der Motor (24) anhält;
wobei, falls die Kalibrierung als notwendig erachtet wird, eine Fläche an der Komponente (42) gegen einen Anschlag (82) getrieben wird, um eine neue erwartete Position in dem Steuerelement für die Komponente (42) bereitzustellen.

2. Elektromechanisches System (20) nach Anspruch 1, wobei die Komponente (42) ein Ventil ist.

3. Elektromechanisches System (20) nach Anspruch 1 oder 2, wobei die Sensoren (30) Hall-Effekt-Sensoren sind.

4. Elektromechanisches System (20) nach einem der vorhergehenden Ansprüche, wobei die Komponente (42) an einem Raumfahrzeug montiert ist.

5. Elektromechanisches System (20) nach einem der vorhergehenden Ansprüche, wobei das Steuerelement (40) dazu programmiert ist, zu bestimmen, ob ein Impuls von jedem der Sensoren (30) entweder ein ungültiger Impuls, ein tatsächlicher Impuls in der erwünschten Richtung oder ein tatsächlicher Impuls in der unerwünschten Richtung ist.

6. Elektromechanisches System nach einem der vorhergehenden Ansprüche, wobei, falls die Kalibrierung als notwendig erachtet wird, ein Sensor (30) eine Stelle eines Merkmals erfasst und die Stelle des Merkmals dazu genutzt wird, eine neue erwartete Position in dem Steuerelement für die Komponente (42) bereitzustellen, und
wobei das Merkmal ein Permanentmagnet ist.

7. Verfahren, umfassend die folgenden Schritte:
Antreiben eines Drehpermanentmagnetmotors (24) zum Positionieren einer Komponente;
Bestimmen einer scheinbaren Position der Komponente durch Sensoren (30) auf Grundlage einer Drehung der Permanentmagneten an dem Sensor (30) vorbei; und
Erfassen einer Bewegung der Permanentmagneten an den Sensoren (30) vorbei in einer erwünschten Richtung und auch einer Bewegung der Permanentmagneten an den Sensoren vorbei in einer unerwünschten Richtung und Vorbereiten eines Zählimpulses einer tatsächlichen Position der Komponente (42) auf Grundlage der beiden Drehrichtungen und Vergleichen der tatsächlichen Position mit einer erwarteten Position der Komponente (42) und Identifizieren einer Notwendigkeit zum Kalibrieren, sollte sich ein Unterschied zwischen der berechneten und der erwarteten Position um mehr als ein vorbestimmtes Ausmaß unterscheiden, und wobei sich der Schritt zum Erfassen der Drehung der Permanentmagneten an den Sensoren vorbei in der unerwünschten Richtung ereignet, wenn der Motor (24) anhält;
wobei der Permanentmagnetmotor (24) eine erste Welle (32) antreibt, die ein erstes Zahnrad (34) aufweist, wobei das erste Zahnrad (34) mindestens ein zweites Zahnrad (36) antreibt, um wiederum eine zweite Welle (38) anzutreiben, die die Komponente (42) in einer Drehrichtung bewegt, wobei das erste und das zweite Zahnrad (34, 36) eine Drehzahl zwischen der ersten und der zweiten Welle (32, 38) ändern, und
wobei jedes von der ersten und der zweiten Welle (32, 38) und Verzahnung zwischen dem ersten (34) und dem zweiten (36) Zahnrad eine Federkraft aufweist, die zu einer Drehung in der unerwünschten Richtung führen kann, wenn der Motor (24) anhält;
wobei, falls die Kalibrierung als notwendig erachtet wird, eine Fläche an der Komponente (42) gegen einen Anschlag (82) getrieben wird, um eine neue erwartete Position in dem Steuerelement für die Komponente (42) bereitzustellen.

8. Verfahren nach Anspruch 7, wobei die Komponente (42) ein Ventil ist.

9. Verfahren nach Anspruch 7 oder 8, wobei die Sensoren (30) Hall-Effekt-Sensoren sind und/oder wobei die Komponente (42) an einem Raumfahrzeug montiert ist.

10. Verfahren nach einem der Ansprüche 7 bis 9, wobei ein Steuerelement (40) bestimmt, ob ein Impuls von jedem der Sensoren (30) entweder ein ungültiger Impuls, ein tatsächlicher Impuls in der erwünschten Richtung oder ein tatsächlicher Impuls in der unerwünschten Richtung ist.

## Revendications

1. Système électromécanique (20) comprenant :
un composant (42) à positionner ;
un moteur rotatif à aimant permanent (24) pour positionner ledit composant ;
des capteurs (30) pour déterminer une position apparente dudit composant (42) sur la base de la rotation desdits aimants permanents ; et
une commande (40) détectant le mouvement desdits aimants permanents devant lesdits capteurs (30) dans une direction souhaitée, et également la rotation desdits aimants permanents devant lesdits capteurs (30) dans une direction non souhaitée, et préparant un comptage d'une position réelle dudit composant (42) basé sur les deux desdites rotations, et dans lequel ladite commande (40) détecte ladite rotation desdits aimants permanents devant lesdits capteurs (30) dans une direction non désirée lorsque ledit moteur (24) s'arrête, **caractérisé par le fait que** ladite commande (40) compare également ladite position réelle à une position attendue pour ledit composant (42) et identifie un besoin d'étalonnage si une différence entre lesdites positions réelle et attendue diffère de plus d'une valeur déterminée, dans lequel ledit moteur à aimant permanent (24) est configuré pour entraîner un premier arbre (32) ayant un premier engrenage (34), ledit premier engrenage (34) entraînant au moins un second engrenage (36) pour, à son tour, entraîner un second arbre (38) qui déplace ledit composant (42) dans un sens de rotation, avec lesdits premier et second engrenages (34, 36) changeant une vitesse entre lesdits premier et second arbres (32, 38) et
dans lequel chacun desdits premier et second arbres (32, 38) et des dents d'engrenage entre lesdits premier (34) et second (36) engrenages ayant une force de rappel qui peut entraîner une rotation dans ladite direction non souhaitée lorsque ledit moteur (24) s'arrête ;
dans lequel si ledit étalonnage est jugé nécessaire, une surface sur ledit composant (42) est entraînée contre une butée (82) pour fournir une nouvelle position attendue dans ladite commande pour ledit composant (42).

2. Système électromécanique (20) selon la revendication 1, dans lequel ledit composant (42) est une soupape.

3. Système électromécanique (20) selon la revendication 1 ou 2, dans lequel lesdits capteurs (30) sont des capteurs à effet Hall.

4. Système électromécanique (20) selon une quelconque revendication précédente, dans lequel ledit composant (42) est monté sur un véhicule spatial.

5. Système électromécanique (20) selon une quelconque revendication précédente, dans lequel ladite commande (40) est programmée pour déterminer si une impulsion de chacun desdits capteurs (30) est soit une impulsion invalide, soit une impulsion réelle dans ladite direction souhaitée, soit une impulsion réelle dans ladite direction non souhaitée.

6. Système électromécanique selon une quelconque revendication précédente, dans lequel si ledit étalonnage est jugé nécessaire, un capteur (30) détecte un emplacement d'une caractéristique, l'emplacement de ladite caractéristique étant utilisé pour fournir une nouvelle position attendue dans ladite commande pour ledit composant (42), et
dans lequel ladite caractéristique est un aimant permanent.

7. Procédé comprenant les étapes suivantes :
l'entraînement d'un moteur rotatif à aimant permanent (24) pour positionner un composant ;
la détermination par des capteurs (30) d'une position apparente dudit composant (30) sur la base de la rotation desdits aimants permanents devant ledit capteur ; et
la détection du mouvement desdits aimants permanents devant lesdits capteurs (30) dans une direction souhaitée, et également la rotation desdits aimants permanents devant lesdits capteurs dans une direction non souhaitée, et la préparation d'un comptage d'une position réelle dudit composant (42) basée sur les deux desdits sens de rotation, et la comparaison de ladite position réelle à une position attendue dudit composant (42) et l'identification d'un besoin d'étalonnage si une différence entre lesdites positions calculée et attendue diffère de plus d'une valeur déterminée, et dans lequel ladite étape de détection de ladite rotation desdits aimants permanents devant lesdits capteurs dans ladite direction non souhaitée se produit lorsque ledit moteur (24) s'arrête ; dans lequel ledit moteur à aimant permanent (24) entraîne un premier arbre (32) ayant un premier engrenage (34), ledit premier engrenage (34) entraînant au moins un second engrenage (36) pour, à son tour, entraîner un second arbre (38) qui déplace ledit composant (42) dans un sens de rotation, lesdits premier et second engrenages (34, 36) changeant de vitesse entre lesdits premier et second arbres (32, 38) et
dans lequel chacun desdits premier et second arbres (32, 38) et des dents d'engrenage entre lesdits premier (34) et second (36) engrenages ayant une force de rappel qui peut entraîner une rotation dans ladite direction non souhaitée lorsque ledit moteur (24) s'arrête ;
dans lequel si ledit étalonnage est jugé nécessaire, une surface sur ledit composant (42) est entraînée contre une butée (82) pour fournir une nouvelle position attendue dans ladite commande pour ledit composant (42).

8. Procédé selon la revendication 7, dans lequel ledit composant (42) est une soupape.

9. Procédé selon la revendication 7 ou 8, dans lequel lesdits capteurs (30) sont des capteurs à effet Hall, et/ou dans lequel ledit composant (42) est monté sur un véhicule spatial.

10. Procédé selon l'une quelconque des revendications 7 à 9, dans lequel une commande (40) déterminant si une impulsion de chacun desdits capteurs (30) est soit une impulsion invalide, soit une impulsion réelle dans ladite direction souhaitée, soit une impulsion réelle dans ladite direction non souhaitée.
